# EUROPEAN PATENT SPECIFICATION

(11) **EP 0 489 169 B1**
(45) Date of publication and mention of the grant of the patent: **30.10.1996**
(21) Application number: 91911299.5
(22) Date of filing: 21.06.1991
(51) Int. Cl.: G02B 6/38

(54) **METHOD OF DISCRIMINATING COMBINATION OF COVERED MULTIPLE-FIBER OPTICAL CABLE WITH FERRULE FOR MULTIPLE-FIBER CONNECTOR**
METHODE ZUM AUSRICHTEN VON BESCHICHTETEN MULTIFASER-OPTISCHEN KABELN MIT STECKERSTIFTEN FÜR MULTIFASERSTECKER
PROCEDE DE DISCRIMINATION D'UN CABLE DE FIBRES OPTIQUES MULTIPLES RECOUVERT COMBINE AVEC UNE VIROLE POUR CONNECTEUR MULTIFIBRES

(30) Priority: 22.06.1990 JP 165032/90; 22.06.1990 JP 165033/90
(43) Date of publication of application: 10.06.1992
(73) Proprietor: THE FURUKAWA ELECTRIC CO., LTD., Tokyo 100 (JP)
(72) Inventor: SUZUKI, Kenji, The Furukawa Electric Co., Ltd., Tokyo 100 (JP); KINOSHITA, Isamu, The Furukawa Electric Co., Ltd., Tokyo 100 (JP); SHIBATA, N., The Furukawa Electr. Co., Ltd. 6-1, Tokyo 1000 (JP)
(74) Representative: Gibson, Stewart Harry
(86) International application number: JP9100837
(87) International publication number: WO9200539

(56) References cited:
- JP-A-63 167 309
- JP-B- 6 153 683
- JP-U- 6 380 510

## Description

This invention generally relates to the technology of connecting a multi-fiber optical fiber ribbon cable to a ferrule of a multicore optical connector.

There have been known flat and tape-like covered multicore optical fiber cables (ribbon cables) and matching ferrules adapted for multicore optical connectors as illustrated in Figs 10 and 11 of the accompanying drawings.

Referring to Figs. 10 and 11, a covered multicore optical fiber cable (ribbon cable) 1 comprises a plurality of silicon optical fibers 2-1 through 2-4, synthetic resin inner sheaths 3-1 through 3-4 for peripherally covering the respective optical fibers 2-1 through 2-4 and a flat and band-shaped outer sheath 4 for collectively enclosing the optical fibers 2-1 through 2-4.

A ferrule 11 as typically shown in Figs. 10 and 11 comprises a body 12 made of a plastic material and is configured in a manner as described below.

While the body 12 is provided with a flange 13 extending upward and downward from a portion thereof, it is generally rectangularly parallelepipedic and has a socket side 14 at the rear end and a butt side 15 at the front end.

The body 12 is provided in its core portion with a fiat cavity 16 extending from the socket side 14 to the butt side 15 for receiving an optical fiber cable, grooves (e.g., V-shaped) 17-1 through 17-4 arranged in parallel with one another for engagedly receiving the respective optical fibers of the optical fiber cable, bores 18-1 through 18-4 also arranged in parallel with one another for receiving the front ends of the respective optical fibers and in its lateral portions with a pair of guide holes 19 arranged in parallel with the flat cavity 16, the grooves 17-1 through 17-4 and the bores 18-1 through 18-4 and running all the way from the socket side 14 to the butt side 15.

It should be noted that each of the grooves and corresponding one of the bores; the groove 17-1 and the bore 18-1, the groove 17-2 and the bore 18-2, the groove 17-3 and the bore 18-3, the groove 17-4 and the bore 18-4 are accurately aligned. The grooves 17-1 through 17-4 and the bores 18-1 through 18-4 constitute an optical fiber holder section of the ferrule 11.

Besides, the body 12 is provided on the top with an opening 20 that communicates with the cavity 16 so that an appropriate amount of bonding agent may be introduced into the cavity therethrough.

For connecting a covered multicore optical fiber cable 1 with another cable (now shown), the latter has to have an end identical with the illustrated one of the fiber cable 1 and another ferrule (not shown) formed symmetrically relative to the ferrule 1 should be brought in position.

For connecting a covered multicore optical fiber cable with an optical device, the latter should be provided with a jack ready for connection with a ferrule 11 having a configuration as described above.

Referring to Figs. 10 and 11, when a ferrule 11 is fitted to an end of a covered multicore optical fiber cable 1, the optical fibers 2-1 through 2-4 are led into the corresponding respective bores 18-1 through 18-4 from the socket side 14 until the inner sheaths 3-1 through 3-4 of the covered multicore optical fiber cable 1 are properly located within the respective grooves 17-1 through 17-4 and the outer sheath 4 is found within the cavity 16 when the front end of each of the optical fibers 2-1 through 2-4 reaches the butt side 15 of the connector.

Then, under this condition, a certain amount of a bonding agent is poured into the cavity 16 to rigidly hold the components in position.

When a pair of covered multicore optical fiber cables are mutually connected, a ferrule is fitted to the matching end of each of the covered multicore optical fiber cables.

A pair of guide pins 21 as illustrated in Fig. 10 are reference pins for precise alignment of the ends of the optical fibers 2-1 through 2-4 and, for this purpose, the guide pins 21 are elaborately worked to precisely fit in the respective guide holes 19.

For aligning the matching ends of a pair of covered multicore optical fiber cables each provided with a ferrule, the guide pins 21 are firstly fitted into the respective guide holes for alignment of the butt sides of the cables so that the optical fibers of the cables are precisely aligned with and abut the corresponding respective optical fibers at the butt ends.

When a covered multicore optical fiber cable is connected with an optical device, the ferrule 11 is inserted into the jack of the optical fiber so that the optical fibers of the cable 1 and those of the optical device are precisely aligned with and abut the corresponding respective optical fibers at the butt ends.

While the operation of fitting a ferrule 11 to an end of a covered multicore optical fiber cable 1 is mainly performed by hand at present, automation of such operation is an urgent issue of technological development.

Such automation of the operation of fitting a ferrule to an end of a covered multicore optical fiber cable should be, as in the case of any process automation, handled with an analytical approach involving development of appropriate hardware and software designed on the basis of data obtained by analyzing the operation, segmentation of the operational process into steps, mechanization and electrification of the steps of the operational process, combination of two or more than two appropriate steps, verification of such combinations of steps and so on.

From the viewpoint of automation of the operation of connecting a covered multicore optical fiber cable 1 and a ferrule 11 as illustrated in Figs. 10 and 11, the operation comprises a step of placing the ends of the optical fibers 2-1 through 2-4 vis-a-vis the respective ends of the grooves 17-1 through 17-4 of the ferrule 11 on respective supporting tables, a step of precisely aligning the optical fibers 2-1 through 2-4 with the respective grooves 17-1 through 17-4 by moving the supporting tables along the X-,Y- and Z- axes of movement and a step of introducing the terminal portions of the optical fibers 2-1 through 2-4 into the respective grooves 17-1 through 17-4.

In other words, the key to the automation of the above operation is the provision of a couple of supporting tables that can be precisely moved and control of movement of the supporting tables.

The problem is, however, that when the outer sheath 4 is partly removed to expose the extremities of the optical fibers 2-1 through 2-4, the latter can often become warped in different directions to lose their straightness.

A covered multicore optical fiber cable 1 comprising optical fibers 2-1 through 2-4 having such warped terminal portions can result in an unsuccessful connecting operation as those warped terminal portions often fail to be correctly led into respective grooves 17-1 through 17-4 of a ferrule 11.

If such a failure is not noticed and the operation is completed without remedying the failure, the warped terminal portions of the optical fibers can be eventually broken in the ferrule.

JP-A-63-80510 discloses a multicore optical connector. US-A-4506947 discloses a method of aligning individual fibers, in which a video camera is used to form an image of an optical fiber on a screen, so that the alignment of the individual fibers can be checked visually.

In accordance with the present invention, there is provided a method of verifying the matching of the ends of a plurality of optical fibers of a multi-fiber ribbon cable with the fiber holding grooves of the ferrule of a multicore optical connector, said ends of the optical fibers having been exposed by removal of the flat outer sheath of the ribbon cable, the method comprising holding the ribbon cable and the ferrule on respective supporting tables to position the said ends of the optical fibers relative to said grooves of the ferrule, moving the supporting tables relative to each other to introduce front end portions of the optical fibers into respective said grooves, and checking the positional relationship between said front end portions of the optical fibers and said grooves at least at one occasion before, during or after introduction of said front end portions of the optical fibers into said grooves, characterised in that an optical apparatus is used to inspect said grooves of the ferrule before introducing said front end portions of the optical fibers into said grooves, said optical apparatus providing data representing the positions of said grooves, storing said data in an electric or electronic store of an arithmetic processing means, using said optical apparatus to inspect said front end portions of the optical fibers before introducing said front end portions of the optical fibers into said grooves, said optical apparatus providing data representing the positions of said front end portions of the optical fibers, entering the latter data into said arithmetic processing means, and operating said arithmetic processing means to compare the data representing the positions of the front end portions of the optical fibers with the data representing the positions of said grooves.

Preferably said optical apparatus is also used to provide data representing the positions of said front ends of the optical fibers after at least partial introduction thereof into said grooves, and said arithmetic processing means is used to compare the latter data with the data representing the positions of said grooves.

Preferably said optical apparatus is also used to provide data representing the positions of said front end portions of said optical fibers after introduction thereof into said grooves and then through respective holding bores of the ferrule, and said arithmetic processing means is used in accordance with the latter data to check whether the fibers project from said bores of the ferrule.

Data on the front end portions of the optical fibers and those on the grooves are collected by an image pickup means or an optical sensor means.

When an image pickup means is used, images of the grooves of the ferrule are taken before introducing the optical fibers into the ferrule and converted into a set of electronic image signals by the image pickup means, which are stored in the electric or electronic means for arithmetic operations.

Then, images of the front end portions of the optical fibers area also taken before (and optionally during and/or after they are introduced into the respective grooves of the ferrule) and converted into electronic image signals by the image pickup means, which are then also entered into said means for arithmetic operations for collation of the collected data.

By the collation of the collected data, it is determined if the front end portions of the optical fibers are properly introduced into the respective optical fiber holding grooves and/or if fractures are present in any of the front end portions of the optical fibers in the optical fiber holding grooves.

When an optical sensor means is used, the front end portions of the optical fibers in the respective optical fiber receiving grooves are scanned by the optical fiber sensor means to determine if those portions are properly held in position in the corresponding respective grooves.

When the front end portions of the optical fibers are scanned by the optical sensor means, areas of the optical fibers that are found within the grooves and those that are found outside the grooves reflect scanning rays of light differently.

When, more specifically, the front end portions of the optical fibers are properly set in position in the respective grooves, scanning rays of light are poorly reflected by the grooves because they are scattered by those portions of the optical fibers in the grooves. When, on the other hand, the front end portions of the optical fibers are not found in the grooves, scanning rays of light are strongly reflected by the grooves because there occurs no scattering of rays of light.

Thus, by checking the reflection of light of the grooves, it can be determined if the front end portions of the optical fibers of an optical fiber cable are properly received by the corresponding respective grooves of a ferrule.

Now, the present invention will be described in greater detail by referring to the accompanying drawings that illustrate preferred embodiments of the invention.

### BRIEF DESCRIPTION OF THE DRAWINGS

Fig. 1 is a schematic perspective view of a system realized by using a first embodiment of the method of verifying matching and alignment of a covered multicore optical fiber cable and a ferrule adapted for a multicore optical connector according to the invention.

Figs. 2 through 5 are images obtained by the embodiment of Fig. 1.

Fig. 6 is a schematic perspective view of a system realized by using a second embodiment of the method of verifying matching and alignment of a covered multicore optical fiber cable and a ferrule adapted for a multicore optical connector according to the invention.

Figs. 7, 8 and 9 show various results of levels of reflected beams of light in the other embodiments.

Figs. 10 and 11 are respective a perspective view and a longitudinal sectional view of a covered multicore optical fiber cable and a ferrule.

### BEST MODES OF CARRYING OUT THE INVENTION

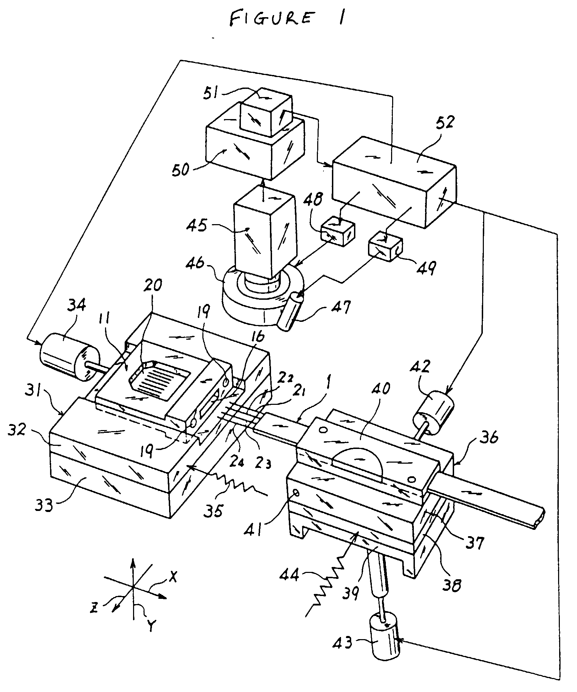

Referring to Fig. 1, a supporting table 31 held to a desired level by known means comprises an upper table plate 32 and a lower table plate 33 and the upper table plate 32 is provided with a cramp mechanism (not shown) of a known type.

The upper table plate 32 of the supporting table 31 is fitted to the lower table plate 33 in such a manner that the former is movable back and forth (along the X-axis) relative to the latter.

A drive mechanism 34 is provided for moving the upper table plate 32 of the supporting table 31 and it comprises as major components a step motor and a fine expander (having a construction similar to a micrometer) that finely expands and contracts under the effort of the step motor. A spring 35 is arranged at a side of the upper table plate 32 opposite to the drive mechanism 34.

As seen from Fig. 1, another supporting table 36 comprises an upper table plate 37, a lower table plate 38 and a supporting plate 39 and the upper table plate 37 is provided with a removable cramp 40.

The upper table plate 37 of the supporting table 36 is fitted at its rear end to the lower table plate 38 in such a manner that the former can be swung open as it is rotated upward around a pin 41 arranged along its rear edge, while the lower table plate 38 of the supporting table 36 is fitted to the supporting plate 39 by known holding means in such a manner that the former is laterally movable (along the Z-axis) relative to the latter and the supporting plate 39 of the supporting table 36 is vertically (along the Y-axis) movable by known means.

Each of the drive mechanism 42, 43 for moving the lower table plate 38 of the supporting table 36 and that for driving the supporting plate 39 of the supporting table 36 comprises a step motor and a fine expander that finely expands and contracts under the effort of the step motor as in the case of their counterpart for moving the upper table plate 32 as described above and a spring 44 is arranged at a side of the lower table plate 38 opposite to the drive mechanism 42.

In Fig. 1, an image pickup means 45 and a pair of lighting apparatuses 46 and 47 are arranged for lighting the supporting tables 31 and 36.

The image pickup means 45 can typically be a CCD camera or a pickup tube of some other type.

The lighting apparatus 46 can advantageously be a horizontally arranged circular lamp which is connected to a power source 48.

On the other hand, the lighting apparatus 47 can preferably be a lamp inclined toward the space separating the two supporting tables 31 and 36 and is also connected to a power source 49.

The image pickup means 45 and the lighting apparatuses 46 and 47 can be moved in the X-, Y- and Z-directions and the angle of inclination of the lighting apparatus 47 is adjustable.

In Fig. 1, reference numeral 50 denotes an electric or electronic means for arithmetic operations or a computer comprising an image processor 51, a controller 52 and memory units, input/output ports, a data bus, registers, ALUs and other components in a known manner as well as a monitor (CRT) and a keyboard if necessary as peripheral equipment.

Said image pickup means 45 is connected to the input port of the means for arithmetic operations 50 while the drive mechanisms 34, 42 and 43 are connected to the output port of the controller 52.

When the system of Fig. 1 realized by using the first embodiment of the invention is used, a ferrule 11 is set in position on the supporting table 31 and a covered multicore optical fiber cable 1 is placed in position on the other supporting table 36.

At this stage, the ferrule 11 is cramped to the upper table plate 32 of the supporting table 31 while the front end of the covered multicore optical fiber cable 1 is also fastened to the upper table plate 37 of the supporting table 36 by means of the cramp 40 so that the end portions of the optical fibers 2-1 through 2-4 are arranged vis-a-vis the corresponding respective grooves 17-1 through 17-4.

Thereafter, the supporting table 36 comprising the upper table plate 37, the lower table plate 38 and the supporting plate 39 is elevated along the Y-axis by a given distance by means of the drive mechanism 43 so that the end portions of the optical fibers 2-1 through 2-4 are precisely found on the level of the grooves 17-1 through 17-4.

Then, prior to insertion of the end portions of the optical fibers 2-1 through 2-4, the grooves 17-1 through 17-4 are photographically taken by the image pickup means 45 to produce their images 117-1 through 117-4 on the screen while the ferrule 11 is illuminated by the lighting apparatus 46.

The screen of the image pickup means 45 which is a CCD camera where images of the grooves 17-1 through 17-4 of a ferrule are displayed typically has a width and a height of 6mm x 5mm (512 x 480 dots).

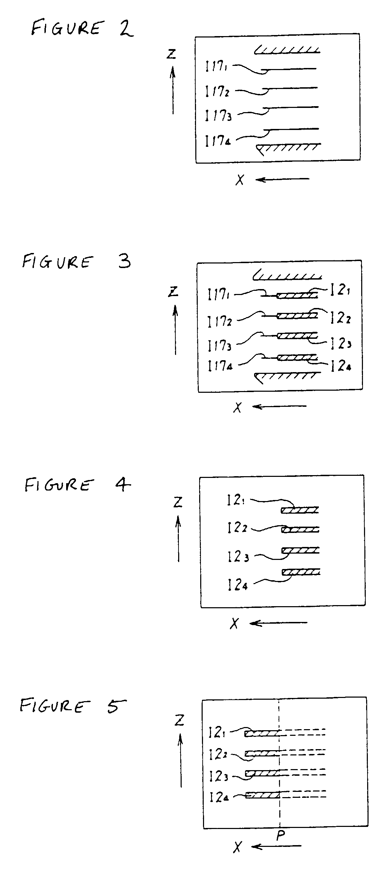

Fig. 2 shows images 117-1 through 117-4 of the grooves 17-1 through 17-4 displayed on the screen of a monitor in so many lines which are parallel to one another.

The X-axis of Fig. 2 indicates the longitudinal direction of the grooves 17-1 through 17-4 (and its direction agrees with that of the X-axis of Fig. 1), while the Z-axis of Fig. 2 indicates a lateral direction intersecting the grooves 17-1 through 17-4 perpendicularly (and its direction agrees with that of the Z-axis of Fig. 1).

Note that above statement concerning X- and Z-axes applies to the X- and Z-axes of Figs. 3, 4 and 5 in the following description.

The reason why the images 117-1 through 117-4 are simply so many lines is that the bottom lines of the V-shaped grooves 17-1 through 17-4 reflect light most strongly toward the image pickup means 45 when the grooves 17-1 through 17-4 are illuminated.

The images 117-1 through 117-4 are electronically processed by utilizing the technique of detecting the center of gravity of an object to determine their coordinates in terms of the Z-axis and the obtained data are stored in the means for arithmetic operations 50.

Then, the front end portions of the optical fibers 2-1 through 2-4 projecting from the front end of the supporting table 36 are photographically taken by the image pickup means 45 while they are illuminated by the lighting means 46 and 47.

The images 12-1 through 12-4 of the front end portions of the optical fibers 2-1 through 2-4 appear on the screen and are parallel to one another as illustrated in Figs. 3 through 5.

The images 12-1 through 12-4 are also electronically processed in a manner as described above for the images 117-1 through 117-4 of the grooves 17-1 through 17-4 and the obtained data (concerning their coordinates for the Z-axis) are given to the means for arithmetic operations 50, which by turn compares the data with the data for the images of Fig. 2.

More specifically, the means 50 performs arithmetic operations on the two sets of values which are given to it for the two sets of images and, if they agree with each other and therefore if it is found that the optical fibers 2-1 through 2-4 are precisely aligned with the corresponding respective grooves 17-1 through 17-4, it transmits an instruction to the system to proceed to the next step of operation or orders the controller 52 to cause the drive mechanism 34 to move the upper table plate 32 on the supporting table 31 in the X-direction of Fig. 1.

If, on the other hand, the means 50 finds that the two sets of values do not agree with each other and therefore the optical fibers 2-1 through 2-4 are not aligned with the corresponding respective grooves 17-1 through 17-4, it orders the controller 52 to cause the drive mechanism 42 to move both the upper table plate 37 and the lower table plate 38 on the supporting plate 39 in the Z-direction of Fig. 1 until the optical fibers 2-1 through 2-4 and the respective grooves 17-1 through 17-4 become precisely aligned.

Once it is found that the optical fibers 2-1 through 2-4 and the respective grooves 17-1 through 17-4 are precisely aligned after an adjustment operation, if appropriate, the upper table plate 32 of the supporting table 31 is driven in the direction of the X-axis of Fig. 1 by the drive mechanism 34 to bring the front end portions of the optical fibers 2-1 through 2-4 into the respective grooves 17-1 through 17-4 of the ferrule 17.

At this stage, the rear end of the upper table plate 37 of the supporting table 36 is lifted by a lifting means (not shown) to make it rotate around the pin 41 until the upper table plate 37 is inclined relative to a horizontal plane by approximately 10°.

As the optical fibers 2-1 through 2-4 are bent by the rotating motion of the upper table plate 37, the front ends of the optical fibers 2-1 through 2-4 are pushed into the respective grooves 17-1 through 17-4 by the resilient force of the optical fibers 2-1 through 2-4 generated within them by the bending action.

When the end portions of the optical fibers 2-1 through 2-4 are brought into the respective grooves 17-1 through 17-4 of the ferrule 17, they are photographically taken by the image pickup means 45 to check the condition of the optical fibers 2-1 through 2-4 in the grooves 17-1 through 17-4 while the grooves 17-1 through 17-4 are illuminated by the lighting apparatus 46.

Fig. 3 shows images of the optical fibers 2-1 through 2-4 inserted into the respective grooves 17-1 through 17-4 of the ferrule 11 and displayed on the monitor screen.

It may be seen from Fig. 3 that the images 12-1 through 12-4 of the optical fibers 2-1 through 2-4 in the form of so many thick bars are placed exactly on the respective lines of the images 117-1 through 117-4 of the grooves 17-1 through 17-4.

If the images of Fig. 3 are electronically processed in a manner as described above and the data obtained for those images (concerning their coordinates in terms of the Z-axis) are entered into the means for arithmetic operations 50 and compared with the data it stores for the images of Fig. 2, it will be difficult to determine if the optical fibers 2-1 through 2-4 are properly placed in the respective grooves 17-1 through 17-4.

The reason for this is that the data obtained for the images of Fig. 3 contains both data for the optical fibers 2-1 through 2-4 and those for the grooves 17-1 through 17-4 in an undiscriminable manner and can lead to an erroneous judgment on the status of the grooves 17-1 through 17-4.

In order to avoid such a situation, the optical fibers 2-1 through 2-4 are photographically taken by the image pickup means 45 when the front end portions of the optical fibers 2-1 through 2-4 are inserted into the respective grooves 17-1 through 17-4 while the ferrule 11 is illuminated by the lighting apparatus 47 which is found askance above the ferrule 11.

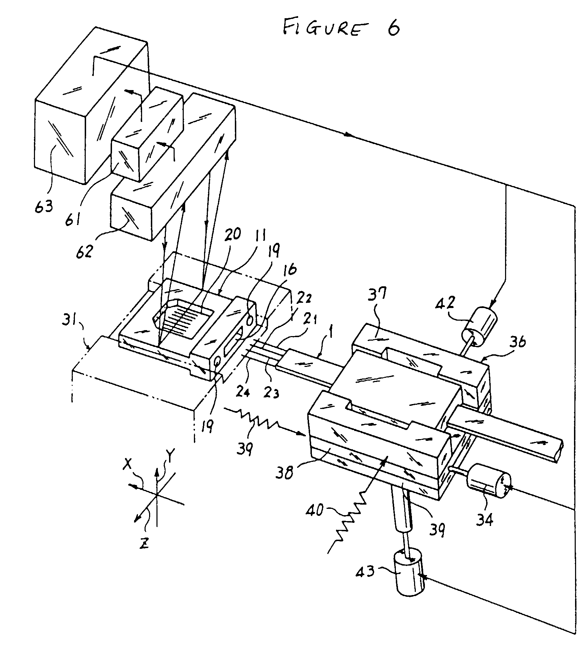

With such an arrangement, rays of light reflected by the grooves 17-1 through 17-4 hardly reach the image pickup means 45, whereas rays of light reflected by the upper surface of the optical fibers 2-1 through 2-4 get into the image pickup means 45, so that the images 2-1 through 2-4 that appear on the monitor screen represent only the respective optical fibers 2-1 through 2-4 as typically illustrated in Fig. 4.

The obtained images 2-1 through 2-4 as shown in Fig. 4 are electronically processed and the obtained data (concerning their coordinates in terms of the Z-axis) are given to the means for arithmetic operations 50, which compares them with the data for the images of Fig. 2.

When the two sets of data compared by the means for arithmetic operations 50 agree with each other, or when the optical fibers 2-1 through 2-4 are properly placed in position in the respective grooves 17-1 through 17-4, it transmits an instruction to the system to proceed to the next step of operation or orders the drive mechanism 34 of the supporting table 31 to continue its operation by issuing a "continuation of operation" signal to it, whichever appropriate. If, on the other hand, the means 50 finds that the two sets of values do not agree with each other and therefore the optical fibers 2-1 through 2-4 are not properly placed in the corresponding respective grooves 17-1 through 17-4, it orders the related components to stop the current operation and start it afresh.

When the result of collation of data by the means for arithmetic operations 50 is "positive", the upper table plate 32 of the supporting table 31 is moved in the direction of the X-axis in a manner as described earlier to push the end portions of the optical fibers 2-1 through 2-4 into the corresponding respective bores 18-1 through 18-4 until the tips of the optical fibers 2-1 through 2-4 project out of the other ends of the bores 18-1 through 18-4.

Thereafter, the ferrule 11 and the tips of the optical fibers 2-1 through 2-4 projecting out of the bores 18-1 through 18-4 are illuminated and photographically taken by the image pickup means 45 in a manner as described above by referring to Fig. 4.

The images taken by the means 45 will normally appear as shown in Fig. 5.

The images in Fig. 5 are found to the left of line P, which indicates the front end of the ferrule 11, and therefore they represent the front end portions of the optical fibers 2-1 through 2-4 properly introduced into the respective bores 18-1 through 18-4 without fractures and projecting out of the other ends of the bores 18-1 through 18-4.

If, on the other hand, any of the optical fibers 2-1 through 2-4 is broken and not properly introduced into the corresponding one of the bores 18-1 through 18-4, its image will not be found to the left of line P.

Therefore, the means for arithmetic operations 50 that receives the data for the broken optical fiber can immediately determine that the front end portion of the optical fiber is broken by recognizing that the image for the optical fiber is not found to the left of line P.

In addition to the above judgment, the means for arithmetic operations 50 performs, if necessary, other operations for determining the condition of the front end portions of the optical fibers 2-1 through 2-4.

For instance, if all the end portions of the optical fibers 2-1 through 2-4 are found to the left of line P as shown in Fig. 5, there can be a situation where any of them is broken within the bores 18-1 through 18-4.

If such is the case, the broken optical fiber can be detected by moving slightly the optical fibers 2-1 through 2-4 to the right in Fig. 1 or in the direction to remove the optical fibers 2-1 through 2-4 out of the bores 18-1 through 18-4 because the end portions of the optical fibers that are not broken will be pulled out of the bores whereas those that are broken will remain in the corresponding bores.

Therefore, any broken optical fibers can be detected by photographically taking their images as in the case of Fig. 5 after slightly pulling out the front end portions of the optical fibers 2-1 through 2-4 from the respective bores 18-1 through 18-4.

When the result of the above checking operation is "positive", the combined covered multicore optical fiber cable 1 and the ferrule 11 are transferred to the next work station. If the result is "negative", on the other hand, the means for arithmetic operations 50 notifies the operator of the defective combination of the covered multicore optical fiber cable 1 and the ferrule 11 so that the operation of combining them may be retried or they may be totally removed out of the scene as faulty parts.

Now, a second embodiment of the present invention will be described by referring to Fig. 6.

In Fig. 6, a supporting table 31 is provided on it with a cramp mechanism of any known type and held to a desired level by a holding means of any known type.

In Fig. 6, another supporting table 36 comprises an upper table plate 37, a lower table plate 38 and a supporting plate 39 and is also provided with a cramp mechanism similar to the one for the supporting table 31.

The upper table plate 37 is horizontally and longitudinally movable relative to the lower table plate 38, which is by turn horizontally and laterally movable relative to the supporting plate 39. The supporting plate 39 is, by its turn, vertically movable by a lift mechanism of any know type.

Drive mechanisms 42, 34 and 43 respectively drive the upper table plate 37, the lower table plate 38 and the supporting plate 39 in the directions of the Z-, X- and Y-axes respectively and have a configuration similar to those illustrated in Fig. 1. The upper table plate 37 and the lower table plate 38 are provided with springs 40 and 39 are arranged on the sides opposite to the respective drive mechanisms 42 and 34.

In Fig. 6, reference numeral 62 denotes an optical sensor provided with a displacement meter 61 and arranged above the supporting table 31.

The optical sensor 62 may be of any appropriate type such as flying spot type, flying image type or veil type and typically of flying spot type comprising an optical scanning system having a laser source and a polyhedral rotary mirror as major components and a light detecting system having a light receiving device.

The displacement meter 61 is typically of laser type (having, e.g., a spot diameter of 0.05mmφ and a resolution of 5µm).

In Fig. 6, an electric or electronic means for arithmetic operations 63, or a computer, comprises memories input/output ports, a data bus, ALUs and a controller as well as peripheral devices such as a monitor and a keyboard.

The optical sensor 62 is connected to the input port of the means for arithmetic operations 63, while the drive mechanisms 34, 42 and 43 are connected to the output port of the means 63.

When a system that utilizes the second embodiment of the invention as illustrated in Fig. 6 is used, a covered multicore optical fiber cable 1 and a ferrule 11 are placed on the respective supporting tables 36 and 31 and the end portions of the optical fibers 2-1 through 2-4 of the covered multicore optical fiber cable 1 are aligned with the corresponding respective grooves 17-1 through 17-4 in terms of the Y-axis in a manner similar to the one described earlier by referring to Fig. 1.

Prior to introducing the end portions of the optical fibers 2-1 through 2-4 into the respective grooves 17-1 through 17-4 of the ferrule 11, the upper surface of the ferrule 11 is laterally scanned by the optical scanning system of the optical sensor 62 and scanning beams of light reflected by the grooves 17-1 through 17-4 light are detected by the light detecting system of the optical sensor 62. The data obtained from the detected beams of light are then given to the displacement meter 61.

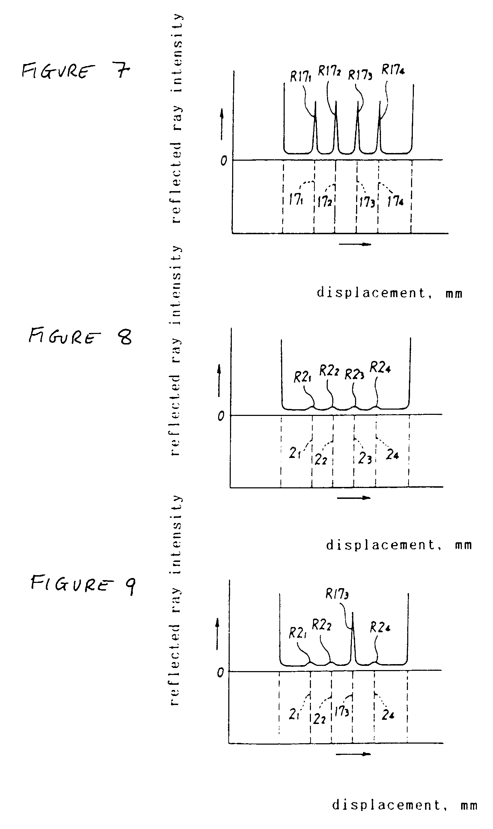

Fig. 7 shows the levels of reflected beams of light R17-1 through R17-4, which are kept high because no significant scattering of light takes place there as no optical fibers are found in the grooves 17-1 through 17-4.

Then, the upper table plate 37 of the supporting table 36 is moved in the direction of the Z-axis in Fig. 6 to align the optical fibers 2-1 through 2-4 of covered multicore optical fiber cable 1 with the respective grooves 17-1 through 17-4 of the ferrule 1 and subsequently the lower table plate 38 of the supporting table 36 is moved in the direction of the X-axis in Fig. 6 to introduced the front end portions of the optical fibers 2-1 through 2-4 into the respective grooves 17-1 through 17-4 of the ferrule 11.

Under this condition, the upper surface of the ferrule 11 is optically scanned in a manner as described above and reflected beams of light are detected and converted into electric signals, which are then given to the displacement meter 61.

If all the front end portions of the optical fibers are properly placed in the respective grooves 17-1 through 17-4 of the ferrule 11 at this stage, scanning beams of light are reflected by the optical fibers 2-1 through 2-4 so that beams of light R2-1 through R2-4 reflected by the optical fibers 2-1 through 2-4 will show the levels as illustrated in Fig. 8.

As seen from Fig. 8, the levels of reflected beams of light R2-1 through R2-4 are lower than those of beams of light R17-1 through R17-4 reflected by the grooves 17-1 through 17-4 because scanning beams of light are scattered by the optical fibers 2-1 through 2-4.

If, on the other hand, the front end portions of the optical fibers are not placed in position in the grooves, reflected beams of light will show levels higher than those of the Fig. 8 because scanning beams of light are partly reflected by the related groove(s).

Assume now, for instance, that the front end portions of the optical fibers 2-1, 2-2 and 2-4 are placed in position in the respective grooves 17-1, 17-2 and 17-4 but the front end portion of the optical fiber 2-3 is not properly fitted into the groove 17-3. Under this condition, the detected beams of light will be a mixture of beams reflected by the optical fibers R2-1, R2-2 and R2-4 and those reflected by the groove 17-3, which have a level higher than those of the reflected beams R2-1, R2-2 and R2-4.

The monitor screen will show a similar pattern when any of the optical fibers 2-1, 2-2 and 2-4 are not properly placed in the respective grooves 17-1, 17-2 and 17-4.

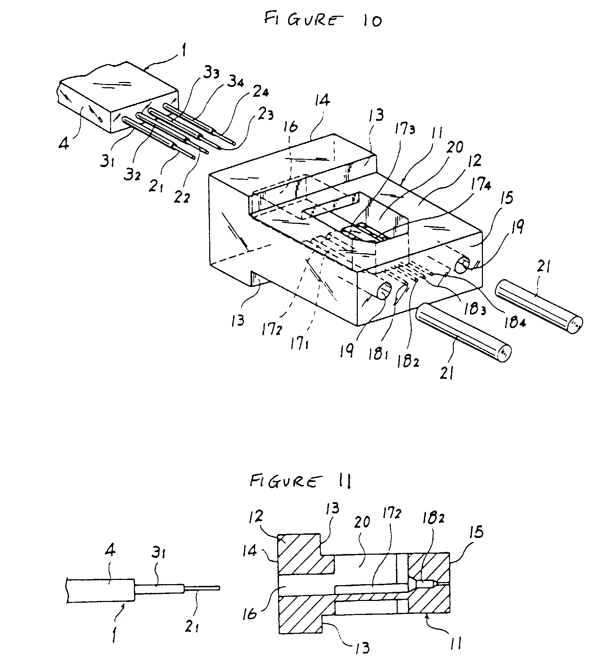

Upon receiving data from the displacement meter 61 representing a pattern as illustrated in Fig. 8 or 9, the electric or electronic means for arithmetic operations 63 performs certain operations.

If the data given to the means 63 reflect a situation as represented by the pattern of Fig. 8, the means for arithmetic operations 63 judges that all the optical fibers 2-1 through 2-4 are properly fitted into the respective grooves 17-1 through 17-4 and orders the related components to proceed to the next step of operation or continue the current step by issuing a "continuation of operation" signal, whichever appropriate. If, on the other hand, the data given to the means 63 represent a pattern as illustrated in Fig. 9, the means judges that an abnormal situation exists and not all the optical fibers 2-1 through 2-4 are properly placed in the respective grooves 17-1 through 17-4 and orders the related components to retry the current step without proceeding to the next step or completely stop the operation by issuing a "suspension of operation" signal.

Alternatively, the data representing the pattern of Fig. 7 may be collected and stored in the means for arithmetic operations 63 as reference data so that the means 63 may compare the data obtained by scanning a covered multicore optical fiber cable and a ferrule with the stored reference data to determine if the optical fibers 2-1 through 2-4 of the cable and the respective grooves 17-1 through 17-4 of the ferrule are properly positioned relative to each other.

When the result of the above checking operation is "positive", the lower table plate 38 of the supporting table 36 is moved in the direction of the X-axis of Fig. 6 to introduce the tip portions of the optical fibers 2-1 through 2-4 into the corresponding respective bores 18-1 through 18-4 and, thereafter, the combined covered multicore optical fiber cable 1 and the ferrule 11 are transferred to the next work station.

If the result is "negative", on the other hand, the means for arithmetic operations 63 either temporarily stops the supporting table 36 and retries the operation of introducing the tips of the optical fibers into the respective bores or completely removes the covered multicore optical fiber cable 1 from the supporting table 36 and places a next covered multicore optical fiber cable 1 to combine it with a ferrule 11.

While a covered multicore optical fiber cable 1 is placed on the supporting table 36 and a ferrule is put on the supporting table 31 in the above description, the placement of a covered multicore optical fiber cable and a ferrule may be reversed by putting a covered multicore optical fiber cable 1 and a ferrule 11 on the supporting tables 36 and 31 respectively.

Besides, the function of moving an object along the X-, Y- and Z-axes may be monopolized by either the supporting table 31 or 36 or, alternatively, both the sup porting tables 31 and 36 may be provided with such a feature.

The image pickup system described by referring to the first embodiment and Figs. 1 through 5 may be replaced by an optical sensing system as described by referring to the second embodiment and Fig.s 6 through 9.

The method of verifying matching of a covered multicore optical fiber cable and a ferrule according to the invention may be applied to operation of fitting the front end portions of a covered multicore optical fiber cable 1 into corresponding grooves 17-1 through 17-4 of a ferrule having no bores 18-1 through 18-4.

Since a method of verifying matching of a covered multicore optical fiber cable and a ferrule according to the invention is based on collection of data concerning the state of the front end portions of the optical fibers of the cable and the optical fiber holding grooves of the ferrule to determine the positional relationship and alignment of the front end portions of the optical fibers and the respective optical fiber holding grooves at least at a point before, during and after the introduction of the front end portions into the respective grooves, the operation of determining if the front end portions of the optical fibers are properly fitted into the respective grooves can be conducted precisely and efficiently, detecting and eliminating any mismatching of a covered multicore optical fiber cable and a ferrule. If there occurs a faulty combination of a covered multicore optical fiber cable and a ferrule, it can be detected and the covered multicore optical fiber cable and ferrule can be removed out of the scene quickly.

It is a common practice to automate by mechanization and electrification the entire process of fitting a covered multicore optical fiber cable to a ferrule including steps of treating the front end of the covered multicore optical fiber cable, checking the treated front end, introducing the treated front end into the ferrule, bonding the treated front end to the ferrule and grinding the butt side of the ferrule so that these steps are put into a single manufacture line.

Such a mechanized and/or electrified line normally comprises a number of turntables on which combined covered multicore optical fiber cables and ferrules are forwarded to succeeding steps by manipulators (robot hands).

A method of verifying matching of a covered multicore optical fiber cable and a ferrule according to the invention can, therefore, be used for a step of such a line where the treated front end of a covered multicore optical fiber cable is introduced into a ferrule.

It may be needless to say that a method according to the invention may also be used for a manufacture line where only the step of introducing a covered multicore optical fiber cable into a ferrule is automated.

## Claims

1. A method of verifying the matching of the ends of a plurality of optical fibers (2-1 to 2-4)of a multi-fiber ribbon cable (1) with the fiber holding grooves (17-1 to 17-4) of the ferrule (11) of a multicore optical connector, said ends of the optical fibers having been exposed by removal of the flat outer sheath (4) of the ribbon cable, the method comprising holding the ribbon cable (1) and the ferrule (11) on respective supporting tables (36, 31), positioning the said ends of the optical fibers (2-1 to 2-4) relative to said grooves (17-1 to 17-4) of the ferrule (11) by moving the supporting tables (36-31) relative to each other to introduce front end portions of the optical fibers (2-1 to 2-4) into respective said grooves (17-1 to 17-4), and checking the positional relationship between said front end portions of the optical fibers (2-1 to 2-4) and said grooves (17-1 to 17-4) at least at one occasion before, during or after introduction of said front end portions of the optical fibers into said grooves, characterised in that an optical apparatus (45) is used to inspect said grooves (17-1 to 17-4) of the ferrule (11) before introducing said front end portions of the optical fibers into said grooves, said optical apparatus (45) providing data representing the positions of said grooves, storing said data in an electric or electronic store of an arithmetic processing means (50), using said optical apparatus (45) to inspect said front end portions of the optical fibers (2-1 to 2-4) before introducing said front end portions of the optical fibers into said grooves, said optical apparatus (45) providing data representing the positions of said front end portions of the optical fibers, entering the latter data into said arithmetic processing means (50), and operating said arithmetic processing means to compare the data representing the positions of the front end portions of the optical fibers with the data representing the positions of said grooves.

2. A method as claim in claim 1, characterised in that said optical apparatus (45) is also used to provide data representing the positions of said front ends of the optical fibers (2-1 to 2-4) after at least partial introduction thereof into said grooves (17-1 to 17-4), and said arithmetic processing means (50) is used to compare the latter data with the data representing the positions of said grooves.

3. A method as claimed in claim 1 or 2, characterised in that said optical apparatus (45) is also used to provide data representing the positions of said front end portions of said optical fibers (2-1 to 2-4) after introduction thereof into said grooves and then through respective holding bores (18-1 to 18-4) of the ferrule (11), and said arithmetic processing means (50) is used in accordance with the latter data to check whether the fibers (2-1 to 2-4) project from said bores (18-1 to 18-4) of the ferrule (11).

4. A method as claimed in any preceding claim, characterised in that said optical apparatus (45) comprises an image pickup means.

5. A method as claimed in any one of the claims 1 to 3, characterised in that said optical apparatus comprises an optical scanning apparatus (62).

## Patentansprüche

1. Verfahren zum Verifizieren der Anpassung der Enden mehrerer Optikfasern (2-1 bis 2-4) eines Mehrfaser-Flachkabels (1) an die die Fasern haltenden Nuten (17-1 bis 17-4) der Quetschhülse (11) eines optischen Mehrleiterverbinders, wobei die Enden der Optikfasern durch Entfernen des flachen Außenmantels (4) des Flachkabels freigelegt worden sind, wobei das Verfahren folgendes umfaßt: Halten des Flachkabels (1) und der Quetschhülse (11) auf jeweiligen Tragtischen (36, 31), Positionieren der Enden der Optikfasern (2-1 bis 2-4) relativ zu den Nuten (17-1 bis 17-4) der Quetschhülse (11) durch Bewegen der Tragtische (36, 31) relativ zueinander, um Vorderendteile der Optikfasern (2-1 bis 2-4) in jeweilige Nuten (17-1 bis 17-4) einzuführen, und Überprüfen der positionsmäßigen Beziehung zwischen den Vorderendteilen der Optikfasern (2-1 bis 2-4) und den Nuten (17-1 bis 17-4) mindestens bei einer Gelegenheit vor, während bzw. nach der Einführung der Vorderendteile der Optikfasern in die Nuten, dadurch gekennzeichnet, daß ein optisches Gerät (45) zum Untersuchen der Nuten (17-1 bis 17-4) der Quetschhülse (11) vor dem Einführen der Vorderendteile der Optikfasern in die Nuten verwendet wird, wobei das optische Gerät (45) die Positionen der Nuten darstellende Daten liefert, die Daten in einem elektrischen oder elektronischen Speicher eines arithmetischen Verarbeitungsmittels (50) speichert, Verwenden des optischen Geräts (45) zum Untersuchen der Vorderendteile der Optikfasern (2-1 bis 2-4) vor der Einführung der Vorderendteile der Optikfasern in die Nuten, wobei das optische Gerät (45) die Positionen der Vorderendteile der Optikfasern darstellende Daten liefert, letztere Daten in das arithmetische Verarbeitungsmittel (50) eingibt, und Betreiben des arithmetischen Verarbeitungsmittels, um die die Positionen der Vorderendteile der Optikfasern darstellenden Daten mit den die Positionen der Nuten darstellenden Daten zu vergleichen.

2. Verfahren nach Anspruch 1, dadurch gekennzeichnet, daß das optische Gerät (45) auch dazu verwendet wird, die Positionen der Vorderenden der Optikfasern (2-1 bis 2-4) darstellende Daten nach deren mindestens teilweiser Einführung in die Nuten (17-1 bis 17-4) zu liefern, und das arithmetische Verarbeitungsmittel (50) dazu verwendet wird, letztere Daten mit den die Positionen der Nuten darstellenden Daten zu vergleichen.

3. Verfahren nach Anspruch 1 oder 2, dadurch gekennzeichnet, daß das optische Gerät (45) auch dazu verwendet wird, die Positionen der Vorderendteile der Optikfasern (2-1 bis 2-4) darstellende Daten nach deren Einführung in die Nuten und dann durch jeweilige Haltebohrungen (18-1 bis 18-4) der Quetschhülse (11) zu liefern, und das arithmetische Verarbeitungsmittel (50) gemäß letzteren Daten dazu verwendet wird, zu überprüfen, ob die Fasern (2-1 bis 2-4) aus den Bohrungen (18-1 bis 18-4) der Quetschhülse (11) herausragen.

4. Verfahren nach einem der vorhergehenden Ansprüche, dadurch gekennzeichnet, daß das optische Gerät (45) ein Bildaufnahmemittel umfaßt.

5. Verfahren nach einem der Ansprüche 1 bis 3, dadurch gekennzeichnet, daß das optische Gerät ein optisches Abtastgerät (62) umfaßt.

## Revendications

1. Procédé de vérification de l'adaptation des extrémités d'une pluralité de fibres optiques (2-1 à 2-4) d'un câble à ruban multifibres (1) aux rainures de maintien de fibres (17-1 à 17-4) de la virole (11) d'un connecteur optique multiconducteur, lesdites extrémités des fibres optiques ayant été dénudées par retrait de la gaine plate extérieure (4) du câble à ruban, le procédé comprenant le maintien du câble à ruban (1) et de la virole (11) sur des tables de support respectives (36, 31), le positionnement desdites extrémités des fibres optiques (2-1 à 2-4) par rapport auxdites rainures (17-1 à 17-4) de la virole (11) en déplaçant les tables de support (36, 31) l'une par rapport à l'autre pour introduire des portions d'extrémité avant des fibres optiques (2-1 à 2-4) dans lesdites rainures (17-1 à 17-4) respectives, et la vérification de la relation de position entre lesdites portions d'extrémité avant des fibres optiques (2-1 à 2-4) et lesdites rainures (17-1 à 17-4) au moins en une occasion avant, pendant ou après l'introduction desdites portions d'extrémité avant des fibres optiques dans lesdites rainures, caractérisé en ce qu'un dispositif optique (45) est utilisé pour inspecter lesdites rainures (17-1 à 17-4) de la virole (11) avant d'introduire lesdites portions d'extrémité avant des fibres optiques dans lesdites rainures, ledit dispositif optique (45) fournissant des données représentant les positions desdites rainures, mettre en mémoire lesdites données dans une mémoire électrique ou électronique d'un moyen de traitement arithmétique (50), utiliser ledit dispositif optique (45) pour inspecter lesdites portions d'extrémité avant des fibres optiques (2-1 à 2-4) avant d'introduire lesdites portions d'extrémité avant des fibres optiques dans lesdites rainures, ledit dispositif optique (45) fournissant des données représentant les positions desdites portions d'extrémité avant des fibres optiques, entrer ces dernières données dans ledit moyen de traitement arithmétique (50), et opérer ledit moyen de traitement arithmétique pour comparer les données représentant les positions des portions d'extrémité avant aux données représentant les positions desdites rainures.

2. Procédé selon la revendication 1, caractérisé en ce que ledit dispositif optique (45) est également utilisé pour fournir des données représentant les positions desdites extrémités avant des fibres optiques (2-1 à 2-4) après l'introduction au moins partielle de celles-ci dans lesdites rainures (17-1 à 17-4), et ledit moyen de traitement arithmétique (50) est utilisé pour comparer ces dernières données aux données représentant les positions desdites rainures.

3. Procédé selon la revendication 1 ou 2, caractérisé en ce que ledit dispositif optique (45) est également utilisé pour fournir des données représentant les positions desdites portions d'extrémité avant desdites fibres optiques (2-1 à 2-4) après l'introduction de celles-ci dans lesdites rainures et ensuite à travers des alésages de maintien respectifs (18-1 à 18-4) de la virole (11), et ledit moyen de traitement arithmétique (50) est utilisé en accord avec ces dernières données pour vérifier si les fibres (2-1 à 2-4) se projettent desdits alésages (18-1 à 18-4) de la virole (11).

4. Procédé selon l'une quelconque des revendications précédentes, caractérisé en ce que ledit dispositif optique (45) comprend un moyen de prise de vues.

5. Procédé selon l'une quelconque des revendications 1 à 3, caractérisé en ce que ledit dispositif optique (45) comprend un dispositif de balayage optique (62).
